# EUROPEAN PATENT APPLICATION

(11) **EP 1 498 366 A1**
(43) Date of publication of application: **19.01.2005**
(21) Application number: 03077253.7
(22) Date of filing: 17.07.2003
(51) Int. Cl.: B65G 17/06

(54) **Method for a link to a rod and conveyor belt with such link/rod connections**

(71) Applicant: Ashworth Jonge Poerink B.V., 7622 BE Borne (NL)
(72) Inventor: van Faassen, Willem, 7556 LN Hengelo (OV) (NL)
(74) Representative: 't Jong, Bastiaan Jacob

(57) **Abstract**

The invention relates to a method for attaching a link (3) to a rod (1) at an attachment zone (2), comprising the steps of
i) providing a rod (1), wherein the attachment zone (2) has a non circular cross-section;
ii) providing a link (3), which comprises legs extending in a longitudinal direction from a lateral cross-member at a closed first end and to an open second end, and defining laterally aligned non-circular apertures on each of the legs, wherein a main dimension of a cross-section of the aperture is smaller than a main dimension of a cross-section of the attachment zone of the rod (1); and
iii) placing the rod (1) in the non-circular apertures of the link (3).

## Description

The present invention relates to a method for attaching a link to a rod at an attachment zone, to a combination of link and rod, wherein the link is attached to the rod according to the said method and to a conveyor belt wherein a rod is attached to a link according to the said method.

Welding is commonly used for attaching metals to each other. However, one of the disadvantages of welding is that due to the high temperatures that have to be used to melt the metal some of the essential properties of the metal are lost or reduced, such as the resistance to friction and to corrosion. To improve the resistance of welded metal to corrosion, the metal is often pickled and passivated. This is however a relatively expensive treatment.

The present invention attempts to solve the above mentioned problems.

A first aspect of the present invention relates to a method for attaching a link to a rod at an attachment zone, comprising the steps of:
i) providing a rod, wherein the attachment zone has a non circular cross-section;
ii) providing a link, which comprises legs extending in a longitudinal direction from a lateral cross-member at a closed first end and to an open second end, and defining laterally aligned non-circular apertures on each of the legs, wherein a main dimension of a cross-section of the aperture is smaller than a main dimension of a cross-section of the attachment zone of the rod; and
iii) placing the rod in the non-circular apertures of the link.

One of the advantages of the present invention is that the metal does not have to be heated, as a result of which the resistance to friction and corrosion is maintained. Therefore, the metal does not have to be subjected to a relatively expensive pickling and passivication treatment. An other advantage of the present invention is that no expensive welding equipment has to be used resulting in lower production costs.

In order to further strengthen the connection between the link and the rod, the method comprises preferably an additional step of rotating the rod in axial direction relative to the link, such that the rod is attached to the link.

In a preferred embodiment of the invention the rod is turned over substantially 90° relatively to the link, resulting in a firm connection between the link and the rod. Preferably, the attachment zone comprises a first shoulder and a second shoulder, wherein the first leg of the link abuts the first shoulder and the second leg of the link abuts the second shoulder. Providing the attachment zone with shoulders makes it easier to attach the rod on the desired place to the link, which results in a higher production.

Another preferred embodiment of the invention comprises a further step of compressing the legs radially in the zone of the apertures, such that het non circular aperture in the link is substantially closed around the rod. The first advantage of this additional step is that the attachment between the rod and the link is even more firm than without this step. A second advantage is that when the attached rods and links are used in a conveyor belt in for example the food industry they are easy to clean, avoiding contamination with micro-organisms. The connection between link and rod can be further improved by compressing the free end of the attachment zone extending beyond the second aperture, such that the material of the attachment zone is formed around the second aperture.
The invention relates in a second aspect to a combination of link and rod, wherein the link is attached to the rod according to the method described above.

A final aspect of the invention relates to a conveyor belt for a system in which the conveyor belt is spirally wound around a driven drum, said conveyor belt comprising a repeating interconnected arrangement of:
- longitudinally spaced rods each extending in a lateral direction defining first and second ends between a central conveying section; and
- connective links connecting the rods together, each connective link comprising legs extending in a longitudinal direction from a lateral cross-member at a closed first end and to an open second end, and defining laterally aligned first apertures on each of said legs at said closed end for reception of a rod, and laterally aligned second apertures at said open end for reception of a rod, whereby the first apertures of a first link are aligned with the second apertures of a second link for reception of a rod there into, wherein said rods are at least attached according to the method as described above to said second aperture.

Figure 1 shows a perspective view of a link and a rod.
Figure 2 shows a perspective view of a rod which is placed in an aperture of a link.
Figure 3 shows a sectional view of the rod in an aperture of the link of Figure 2.
Figure 4 shows a perspective view of a rod which is placed in an aperture of a link and wherein the rod is rotated in axial direction relative to the link.
Figure 5 shows a sectional view of the rod in an aperture of the link of Figure 4.
Figure 6 shows a perspective view of a rod which is place in an aperture of a link and wherein the rod is rotated and the legs are compressed at in the zone of the apertures.
Figure 7 shows a sectional view of the rod in an aperture of the link of Figure 6.

The scale of the figures is not according to the real scale of the invention. The figures are only intended to illustrate the invention.

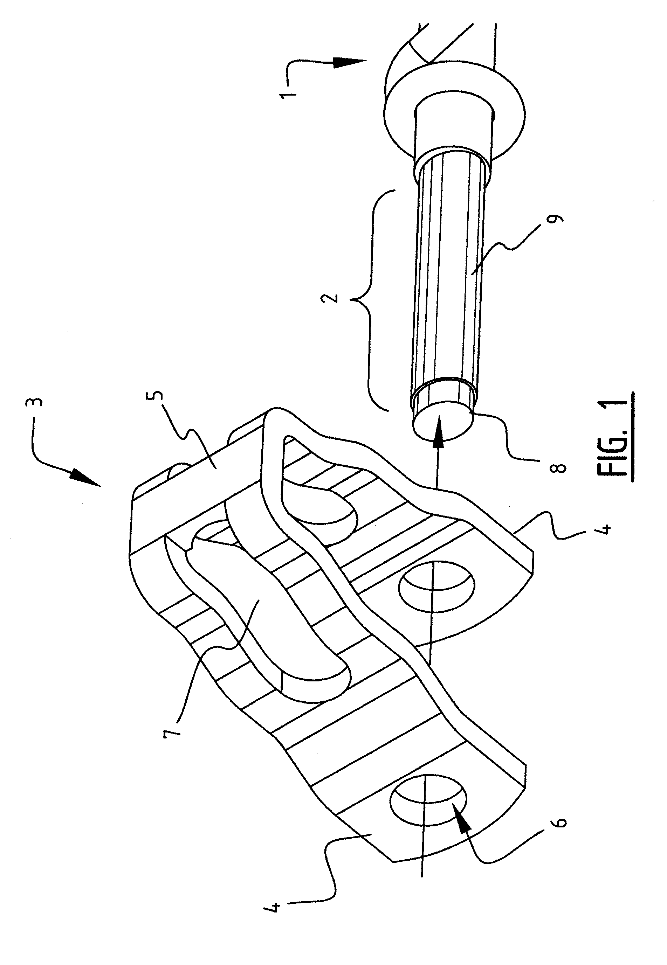

Figure 1 shows a rod 1 with a non-circular attachment zone 2 with a first 8 and a second 9 shoulder and a link 3 comprising legs 4 which extend in a longitudinal direction from a lateral cross-member 5 at a closed end and to an open second end. At the open second end each leg 4 is provided with a non-circular aperture 6, for placing and attaching the attachment zone of the rod 1 into. The link further comprises a first aperture at the closed first end.

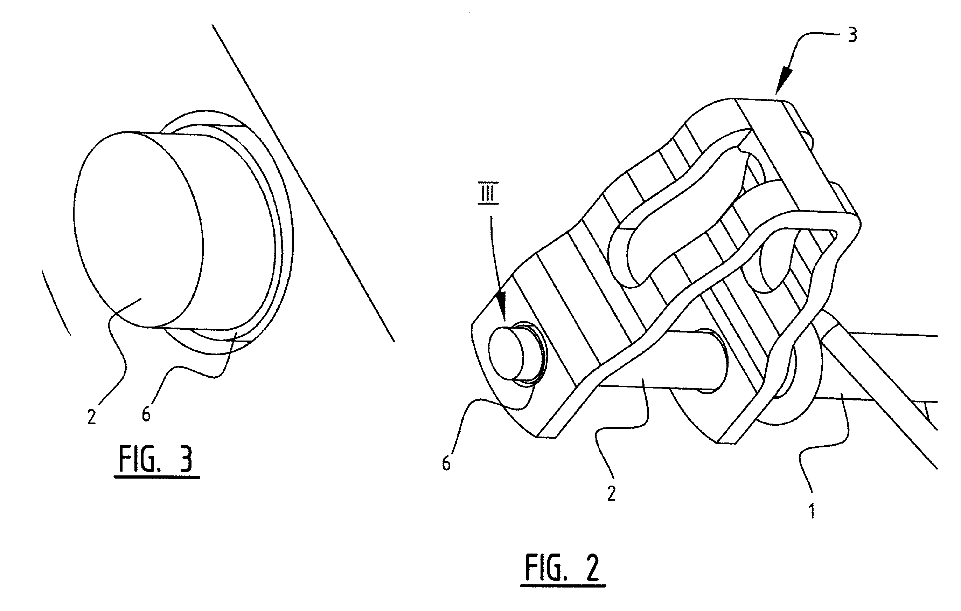

Figure 2 shows a link according to Figure 1 wherein the non-circular attachment zone 2 of the rod 1 is placed in the non-circular apertures 6 at the open second end of the link 3.

Figure 3 shows in detail the non-circular attachment zone 2 of the rod 1, which is placed in the non-circular aperture 6.

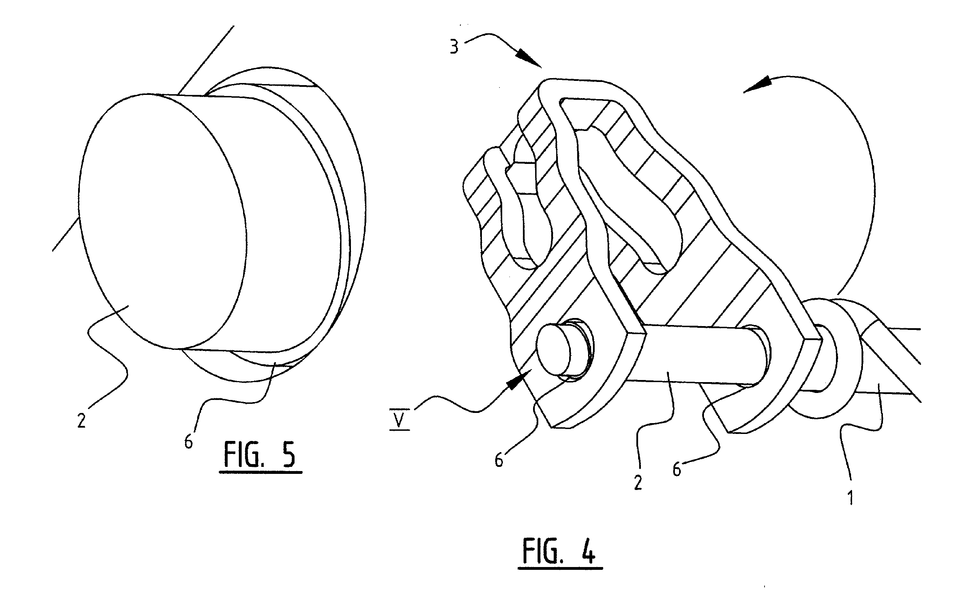

Figure 4 shows a link 3 and a rod 1, wherein the non-circular attachment zone 2 of the rod 1 is placed in the second aperture 6 and rotated axially relative to the link 3, such that the attachment zone 2 of the rod 1 is attached to the link 3.

Figure 5 shows in detail the non-circular attachment zone 2 of the rod 1, which is placed in the non-circular aperture 6, and is rotated axially relative to the link 3, such that it is attached to the link 3.

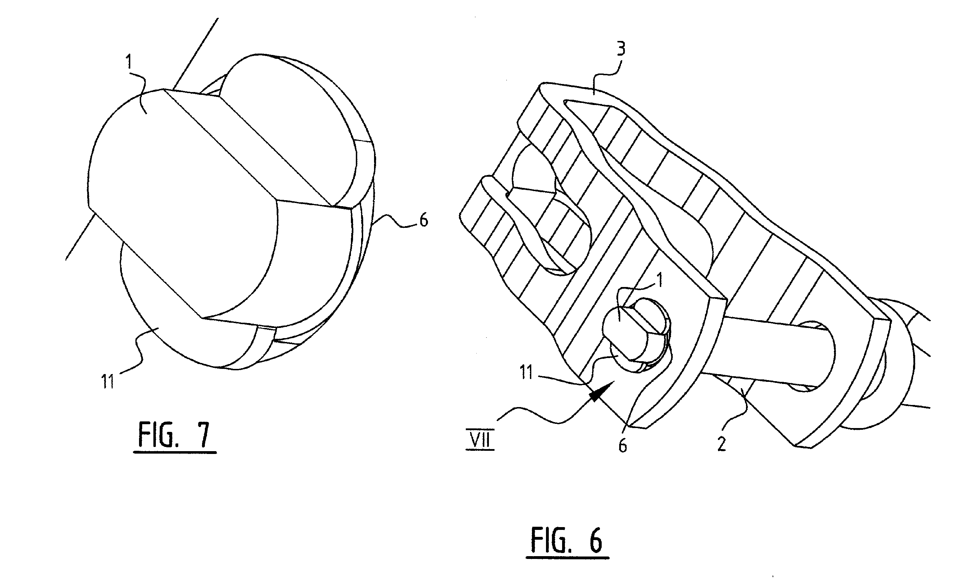

Figure 6 shows a preferred embodiment of the invention comprising a link 3 and a rod 1, wherein the non-circular attachment zone 2 of the rod 1 is placed in the second aperture 6 and rotated axially relative to the link 3, such that the attachment zone 2 of the rod 1 is attached to the link. To make the attachment between the rod and the link more firm, the legs 4 of the link 3 have been compressed radially in the zone of the apertures 6, such that the non-circular aperture 6 in the link 3 is substantially closed around the rod 1. To further strengthen the connection between the link 3 and the rod 1, the free end of the attachment zone 2 which extends beyond the second aperture 6 has been compressed. This is done in such a way that the material of the attachment zone is formed around the second aperture 6.

Figure 7 shows in detail the the non-circular attachment zone 2 of the rod 1, which is placed in the non-circular aperture 6, and is rotated axially relative to the link 3, such that it is attached to the link 3. It further shows the compressed free end 11 of the attachment zone 2 of the rod 1.

## Claims

1. Method for attaching a link to a rod at an attachment zone, comprising the steps of
i) providing a rod, wherein the attachment zone has a non circular cross-section;
ii) providing a link, which comprises legs extending in a longitudinal direction from a lateral cross-member at a closed first end and to an open second end, and defining laterally aligned non-circular apertures on each of the legs, wherein a main dimension of a cross-section of the aperture is smaller than a main dimension of a cross-section of the attachment zone of the rod; and
iii) placing the rod in the non-circular apertures of the link.

2. Method according to claim 1, further comprising the step of rotating the rod in axial direction relative to the link, such that the rod is attached to the link.

3. Method according to any of the claims 1-2, wherein the rod is turned over substantially 90° relatively to the link.

4. Method according to any of the claims 1-3, wherein the attachment zone comprises a first shoulder and a second shoulder and wherein the first leg of the link abuts the first shoulder and the second leg of the link abuts the second shoulder.

5. Method according to any of the claims 1-4, further comprising the steps of compressing the legs radially in the zone of the apertures, such that the non circular aperture in the link is substantially closed around the rod.

6. Method according to any of the claims 1-5, further comprising the step of compressing the free end of the attachment zone extending beyond the second aperture, such that the material of the attachment zone is formed around the second aperture.

7. Combination of link and rod, wherein the link is attached to the rod according to the method of any of the claims 1-6.

8. Conveyor belt for a system in which the conveyor belt is spirally wound around a driven drum, said conveyor belt comprising a repeating interconnected arrangement of:
- longitudinally spaced rods each extending in a lateral direction defining first and second ends between a central conveying section; and
- connective links connecting the rods together, each connective link comprising legs extending in a longitudinal direction from a lateral cross-member at a closed first end and to an open second end, and defining laterally aligned first apertures on each of said legs at said closed end for reception of a rod, and laterally aligned second apertures at said open end for reception of a rod, whereby the first apertures of a first link are aligned with the second apertures of a second link for reception of a rod there into, wherein said rods are at least attached according to the method of any of the claims 1-6 to said second aperture.
